# EUROPEAN PATENT APPLICATION

(11) **EP 2 549 383 A2**
(43) Date of publication of application: **23.01.2013**
(21) Application number: 12177019.2
(22) Date of filing: 19.07.2012
(51) Int. Cl.: G06F 9/54

(54) **Context-related data handling**

(30) Priority: 19.07.2011 US 201113135976
(71) Applicant: Mitel Networks Corporation, Ottawa, ON K2K 2W7 (CA)
(72) Inventor: Hillier, Peter Matthew, Ottawa, Ontario K2T 0A7 (CA)
(74) Representative: Hewett, Jonathan Michael Richard

(57) **Abstract**

Described are a system and method for providing an application with data corresponding to a context-related query. A first action related to a first application is performed. A context-related data result related to the first action is determined. The context-related data result is provided to a second application. The context-related data result is processed by the second application to perform a second action.

## Description

The present application relates generally to context-related data handling, for instance context-aware computer applications, and more particularly, to systems and methods for providing context-related data between applications.

Modern business and personal websites typically have a "Contact Us" page that enables website visitors to quickly obtain company contact information such as an email address, street address, phone number, directions, maps, and the like.

When a smartphone, tablet, or other electronic device having a small screen size is used to navigate a website, the webpage layout can be much larger than the viewing space on the device display. Therefore, a viewer may see a small portion of the webpage at a time on the display. Certain devices such as smartphones permit the viewer to employ a "pan and scan" method to locate information not displayed on the visible portion of the webpage. Here, the viewer can scroll the device view horizontally and/or vertically across the webpage, or in the case of some touchscreen displays, shrink the size of the webpage so that a larger area of the webpage can be displayed. In doing so, relevant contact information can be difficult to find or select even when this information is displayed.

It is common for individuals having a web browser to enter different sections of a website sequentially (one at a time) using browser tabs or additional browser windows to determine if products and services match the needs of the user. Subsequently, a user may desire to contact the website owner to order a product or service. This requires the user to navigate back to the "Contact Us" webpage in order to find the phone number or email address.

A first aspect of the invention provides a bridge application system, comprising:
a context monitoring module that detects an action related to a first application;
a plug-in module that searches the first application for context-related data corresponding to the action; and
a native application interface that outputs the context-related data to the second activated application.

The bridge application system may further comprise a rules engine that includes one or more rules that establishes context-based search criteria for the plug-in module.

The plug-in module may store the context-related data in an application context cache. Here, the bridge application system may further comprise a pre-trigger module that selects the context-related data from the application context cache and pre-fills the second application with the context-related data in response to the context monitoring module detecting a launching of the second application.

The plug-in module may format the context-related data for compatibility with the second application, and outputs the formatted context-related data to the second application. Here, the plug-in module may output the formatted context-related data to the second application in response to the context monitoring module detecting an activation of the second application.

The native application interface may populate the second application with the context-related data received from the plug-in module in response to the context monitoring module detecting an activation of the second application.

A second aspect provides a computer-implemented method for providing an application with data corresponding to a context-related query, comprising:
performing a first action related to a first application;
determining a context-related data result related to the first action;
providing the context-related data result to a second application; and
processing the context-related data result by the second application to perform a second action.

Providing the context-related data result to the second application may comprise:
populating an application context cache with data corresponding to a user context, the data including the context-related data related to the first action;
detecting an activation of the second application; and
prefilling the second application with the context-related data result from the application context cache.

Providing the context-related data result to the second application may comprise:
formatting the context-related data result for compatibility with the second application;
activating a third application in communication with the second application;
performing the second action from the second application; and
populating the third application with data related to the formatted context-related data result. Here, the second application may a contact list application and the third application may be a dialer application.

The computer-implemented method may further comprise performing a third action from the third application in response to populating the third application with data related to the formatted context-related data result.

The computer-implemented method may comprise:
populating the second application with the formatted context-related data result; and
performing the third action by selecting the formatted context-related data result.

The second application and the third application may be the same application.

The computer-implemented method may comprise:
detecting a user context related to the activation of the second application; and
populating the second application with the context-related data result in response to detecting the user context.

The first application may be a browser application and the second application may be a phone dialer application.

A third aspect provides a computer-implemented method for providing context-related data from a web browser to a native mobile device application, comprising:
searching a website from a web browser;
activating a mobile device application;
retrieving context-related contents from the website; and
populating the mobile device application with a result of the retrieved context-related contents.

Populating the mobile device application with the result of the retrieved context-related contents may comprise:
storing the retrieved context-related contents in an application context cache;
detecting the activation of the mobile device application; and
prefilling the mobile device application with the result of the retrieved context-related contents stored in the application context cache.

Populating the mobile device application with the result of the retrieved context-related contents may comprise:
creating a contact record that includes the result; and
adding the contact record to a contact list corresponding to the mobile device application.

Populating the mobile device application with the result of the retrieved context-related contents may comprise:
detecting the activation of the mobile device application; and
populating the mobile device application with the result in response to detecting the activation of the mobile device application.

Features and advantages of the invention will be apparent from the detailed description which follows, taken in conjunction with the accompanying drawings, which together illustrate, by way of example, features of the invention; and, wherein:
Figure 1 is a block diagram illustrating a high-level mobile device architecture in which embodiments of the present inventive concepts can be employed;
Figure 2 is a block diagram illustrating elements of a bridge application system, in accordance with an embodiment;
Figure 3 is a flowchart of a method for providing context-related data to an application, in accordance with an embodiment;
Figure 4 is a flowchart of a method for bridging context-related data between two applications, in accordance with an embodiment;
Figure 5 is a schematic block diagram illustrating a method for populating a dialer application with a phone number identified during a website search, in accordance with an embodiment;
Figure 6 is a flowchart of a method for bridging context-related data between two applications, in accordance with another embodiment;
Figure 7 is a schematic block diagram illustrating a method for populating a contact list application with a phone number identified during a website search, in accordance with an embodiment;
Figure 8 is a flowchart of a method for bridging context-related data between two applications, in accordance with another embodiment;
Figure 9 is a schematic block diagram illustrating a method for creating a contact from a phone number identified during a website search in response to the activation of a dialer, in accordance with an embodiment; and
Figure 10 is a schematic block diagram illustrating a method for populating a dialer application with a phone number identified during a website search in response to the activation of the dialer, in accordance with an embodiment.

The description set forth below in connection with the appended drawings is intended as a description of embodiments of the present inventive concepts. It is to be understood that the present inventive concepts are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

The present inventive concepts overcome limitations regarding conventional approaches for navigating between applications to obtain data, especially when using a small display. Such conventional approaches require the user to open a first application, for example, the web browser, then to perform a website search for the desired information, for example, a phone number, then to manually enter the phone number into a second application such as a phone dialer, text messaging box, and the like. Users often find it difficult to find desired information, for example, contact phone numbers, when such information is stored in a large or poorly designed website or data repository. This problem is exacerbated by the small footprint of a mobile device display, where the user must often pan about a webpage or document in order to find the desired information.

Conventional approaches do not integrate a phone's native applications, for example, a dialer, with a web browser so that when a user searches a company website for a phone number, the phone number is automatically inserted in the dialer window. Click-to-dial applications can be used to place calls from a phone without the need to enter external numbers to the phone keypad. For example, click-to-dial features permit a user visiting a web site to identify a phone number or other relevant contact information, and click a button, image, text, or hyperlink corresponding to the phone number to establish a phone call, SMS session, and the like with the contact. However, the phone number or other relevant contact information must first be located in order to launch the click-to-dial application. If click-to-dial is not supported, the user is generally required to first open the dialer application, which can obscure the web browser due to the size of the display, and then toggle back and forth between the applications to read the number from the web browser, and enter it into the device. Alternatively, a cut and paste feature can be used, but nevertheless requires moving across applications.

The embodiments of the present inventive concepts described herein provide for systems and methods that simplify the user interaction of applications by providing an application bridge between different applications so that data from one application can be seamlessly provided to another application. The embodiments permit a user to activate a native application such as a mobile device dialer, and provide the application with relevant data related to predictive or contextual user behavior. Typically, a mobile device user has a better understanding of the features and functions of a native device application such as a phone dialer than the contents of a data repository or website being navigated. Thus, a user tends to prefer to activate a well-known application from the device, but may have difficulty locating relevant content to populate the application.

Accordingly, the embodiments of the present inventive concepts permit a user to perform a computer-related action such as browse a website, and to activate a dialer, text messaging or SMS application, email application, or other application. A query is made of the actively opened website for context-related data related to an application. For example, when considering the dialer application, a search can be performed for information such as a website contact's phone number. A determination can be made that the action, i.e., the search for phone numbers, is related to the activated dialer or SMS application, for example, by monitoring the user's context such as the user's status related to currently open applications. A phone number identified during the query can be inserted into a dialer window. The user can subsequently initiate an SMS text message or phone call to a contact specified in the queried webpage using the phone number automatically populated into the dialer window, instead of requiring the user to search a website find the phone number, then manually insert the number into the dialer or text message field, or using a click-to-dial application to activate the link containing the phone number. In sum, the present inventive concepts assume that when the dialer is activated while a web page is being used, the user wishes to contact the phone number associated with the website, and therefore the dialer is pre-populated with that number. The user is free to access his or her contacts and dial a different number, or delete and manually enter another number. In an embodiment, the systems and methods attempt to pre-fill application data such as a phone number for the dialer application based on the user's most recent activities, for example, viewing a website.

Although reference is frequently made to certain applications such as web browsers and dialer applications, embodiments of the systems and methods can be applied to any application on the mobile device. In particular, embodiments of the systems and methods attempt to predict or interpret what a mobile device user wants to do by monitoring a user's context, for example, detecting the user's most recent online activities. For example, the systems and methods can monitor which pictures are open for viewing or detect other actions or tasks being performed by a user. Upon activation of an email application, a subsequent request to attach a document to the email application can also be detected, whereby when an email message is composed along with a request to attach a document, the most recently opened picture, document, video recording, and the like can be automatically offered for attachment.

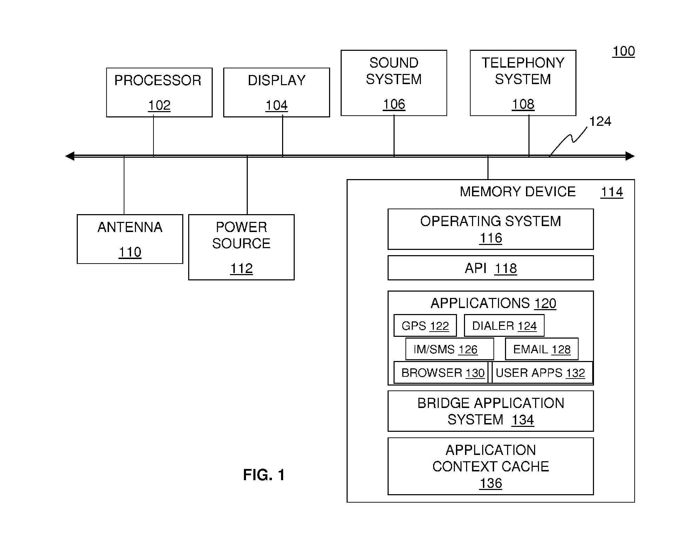

Figure 1 is a block diagram illustrating a high-level mobile device architecture 100 in which embodiments of the present inventive concepts can be employed. The mobile device architecture 100 can also apply to other small electronic devices, for example, a laptop, notebook, tablet, or handheld computer. The architecture 100 includes a processor 102, for example, a central processing unit (CPU), a display 104, a sound system 106, a telephony system 108, an antenna 110, a power source 112, and a memory device 114, which can communicate with each other over a system bus 124 known to those of ordinary skill in the art, for example, a peripheral component interconnect (PCI) bus. While not shown, the architecture 100 can include other components such as inputs and outputs known to those of ordinary skill in the art for entering data and/or receiving data in accordance with one or more communication modes, for example, text, graphical images, video, and the like.

The display 104 can be a touch-sensitive graphical display such as a liquid crystal display (LCD). The display 104 can display a graphical user interface (GUI) that presents textual and/or graphical images to the display 104, for example, icons, dialog boxes, menus, buttons, cursors, scroll bars, and other elements known to those of ordinary skill in the art. Elements of the textual/or and graphical images can be arranged in well-known layouts on the display 104, for example, multiple application windows, when activated, can be displayed in a cascade or overlapping arrangement.

The sound system 106 includes a speaker, a microphone, and other communication elements for converting speech into electrical signals and/or converting electrical signals into sound.

The telephony system 108 can transmit or receive communication signals related to voice, video, data, etc. via the antenna 110 to and from a communications network. A communications network can include, but not be limited to, a mobile voice network, a data network, a cellular network, a public switched telephone network (PSTN), a satellite network such as the Global Positioning System (GPS), a local area network (LAN), the Internet, or any other network known to those of ordinary skill in the art as being capable of exchanging voice, data, and/or video with other local, nationwide, or international locations. The architecture 100 can include one or more wireless or wireline connectors (not shown) known to those of ordinary skill in the art for communicating with one or more of the abovementioned networks.

The memory device 114 can store computer instructions, data, and the like in the form of executable program code for an operating system 116, an application program interface (API) 118, one or more applications 120, a bridge application system 134, and an application context cache 136, which can be processed by the processor 102. The operating system 116 can be a commercially available or proprietary operating system for computers or embedded systems, for example, iOS, Blackberry OS, Android OS, a LINUX® operating system and the like. The operating system 116 and/or the applications 120 can communicate with the API 118, for example, to populate an application with context-related data identified from a query, for example, populating a dialer application 124 with a phone number, or adding, deleting, or modifying contacts of a contact list.

The applications 120 can include one or more application programs, for example, a GPS application 122, a dialer application 124, a collaborative application 126 such as instant messaging, presence, text messaging, for example, short message service (SMS), or other real-time messaging application, an email application 128, a browser 130 such as a Microsoft Internet Explorer browser, a Mozilla® Firefox® browser, or a Google Chrome@ browser, and/or user application programs 132 known to those of ordinary skill in the art, for example, social networking applications such as a Facebook® application. In an embodiment, one or more of the applications 120 can be configured as a context-aware application, for example, the dialer application 124.

The bridge application system 134 bridges applicable data between applications 120 according to predictive or contextual behaviors, which can be anticipated by monitoring activities performed by the user. For example, the bridge application system 134 can determine which applications are currently opened, and monitor activities associated with the opened applications, for example, determining that a user is viewing a webpage or editing a word processing document, or viewing a digital photograph. The bridge application system 134 can query a website, a document, or other content sources for context-related data, for example, a phone number corresponding to a contact located in a webpage. The queried context-related data can be stored in the application context cache 136, or output directly to an application 120 configured to receive and process the context-related data. In one example, a phone number retrieved from a queried webpage can be output to the dialer application 124. In another example, a word processing document can be attached to the email application 128 after being identified by the bridge application system 134 as being recently opened. Accordingly, the user can initiate a phone call, email message, text message, or other electronic communication without the need to search for the phone number, email attachment, and the like, and without the need manually perform the task of entering the information into the application 120, especially when performing such tasks on a small display.

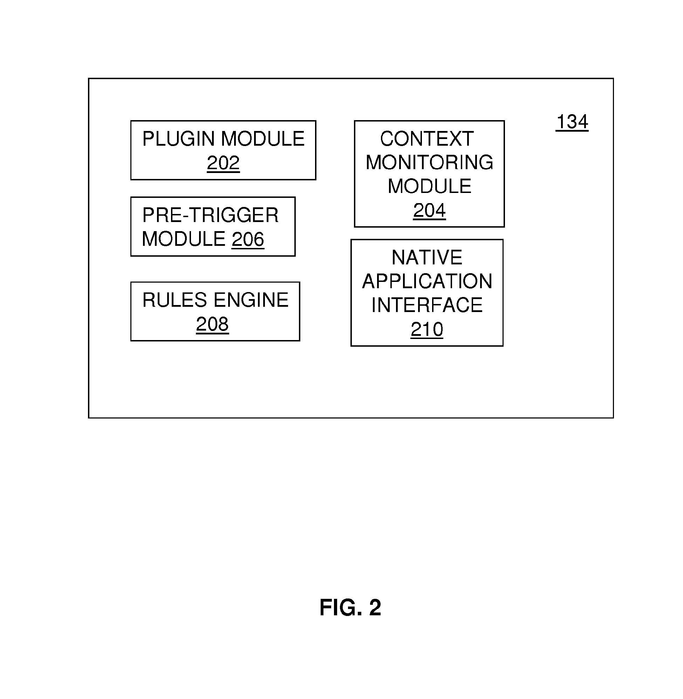

Figure 2 is a block diagram illustrating elements of the bridge application system 134 of Figure 1, in accordance with an embodiment. The bridge application system 134 can include a plug-in module 202, a context monitoring module 204, a pre-trigger module 206, a rules engine 208, and a native application interface 210. The bridge application system 134 can execute entirely on an electronic device having at least a processor and a memory, for example, a mobile phone, tablet, laptop computer, and the like, or some elements of the bridge application system 134 can execute on one electronic device, while other elements execute on another electronic device. The bridge application system 134 can include hardware, software, firmware, or a combination thereof.

The plug-in module 202 establishes communications between an application 120 and/or the application context cache 136 to receive and process context data. In an embodiment, the plug-in module 202 includes a browser plug-in for establishing communications between the web browser 130, the application context cache, and/or other applications 120. The plug-in module 202 can search the application 120 or a related content source such as a webpage, database, word processing document, or other content source for context-related content related to a user's current activities. The plug-in module 202 can mine a content source according to methods known to those of ordinary skill in the art, for example, keyword searches, web crawling, and the like. For example, when a user searches a website, the user may access several different sections, each presenting a webpage to the user. The plug-in module 202 can query each webpage that the user peruses for contact information, i.e., names, addresses, phone numbers, and the like, and output the query results to the application context cache 136. The application context cache 136 can be configured to be active, e.g., for storing context-related data, so long as the browser 130 is also open. Thus, context-related data added to the cache 136 during a web browsing session can be removed when the browser 130 is closed.

In an embodiment, the plug-in module 202 automatically populates an application 120 with relevant context-related data in response to detecting an activation of the application 120. In another embodiment, the plug-in module 202 adds context-related data to the application context cache 136 independently of a user context. An application 120 can query the plug-in module 202 or the application context cache 136 upon activation such that the relevant data can be retrieved and can populate the application 120 in accordance with an on-demand configuration.

The plug-in module 202 can be configured to process query results in a format that is compatible with an application 120. For example, the plug-in module 202 can create a new contact record that includes a phone number received from a query of a Contact Us webpage. The bridge application system receives the phone number from the query of a Contact Us webpage and uses the native application interface 120 to add a new contact.. When the user activates a dialer application 124 or related application and navigates to the contacts, or if the user accesses the contacts application directly, depending on the user interface, a new contact entry will exist with a name and number obtained from the Contact Us web page.

The context monitoring module 204 can detect a user's context, for example, status, location, actions, and/or other context-related information pertaining to the mobile device. The context monitoring module 204 can therefore determine that a website is being viewed, digital photographs are displayed, a spreadsheet application is open, and the like. The context monitoring module 204 can also detect an activation of a native application, such as the dialer application 124, email application 128, and the like, which can receive context-related data. The context monitoring module 204 and the plug-in module 202 can communicate with each other, and/or with the rules engine 208, to determine whether any data identified from a query of an application's contents is relevant to an application 120. Any data related to recent user activity can be used by the bridge application system 134 to predict or interpret what the user is interested in, what the user wants to do, or other context indicators known to those of ordinary skill in the art. Thus, the context monitoring module 204 can check the user's context to determine if the user is performing other actions, and whether those actions can in any way be related to other applications active, or recently activated, on the device. For example, when the dialer application 124 is activated, the context monitoring module 204 can communicate with the plug-in module 202 and/or the rules engine 208 to determine that a phone number identified from a web site query is to be provided to the activated dialer application.

The pre-trigger module 206 can receive a detection signal from the context monitoring module 204 indicating that an application 120 has been activated, and in response check the application context cache 136 for stored context-related data that is relevant to the activated application 120. The pre-trigger module 206 can select from the cache 136 context-related data identified during recent online tasks, for example, while browsing a website. The pre-trigger module 206 can prefill the application 120, for example, the dialer application 124, with a phone number selected from the cache 136. The pre-trigger module 206 can provide multiple context-related data results to the application 120, for example, multiple phone numbers sent to the dialer application 124. The context-related data results can be sent in a sequential order or format determined by the API 118.

The rules engine 208 can be preprogrammed with user-defined configuration options, including the types of content for the plug-in module 202 to seek, for example, phone numbers only, email addresses only, Twitter® data, and the like, or a combination thereof. The rules engine 208 can associate data types with an application 120, for example, email addresses corresponding to the email application 128, phone numbers corresponding to the dialer application 124 or an SMS application 126, and the like. The rules engine 208 can place limits on the number of entries cached or created for each type of content, for example, the first phone number, the most recent phone number, a maximum number of entries, and the like retrieved from a content query. The rules engine 208 can include a set of user-defined or predefined rules that determines the order in which context-data can be presented to an application 120, for example, providing one number at a time to the dialer application 124. The rules engine 208 can be limited by the capabilities offered by the API 118 and/or the application 120.

The native application interface 210 outputs the context-related data to an application 120. The native application 210 can communicate with the API 118 to populate an application 120. For example, the native application 210 can output a new contact record that includes a phone number provided by the plug-in module 202 during a website query. The new contact record can be added to a native contact list using the native application interface 210 provided by the operating system m6. The API 118 can also remove the new contact record after the contact list is closed, or after a user places a call using the contact record.

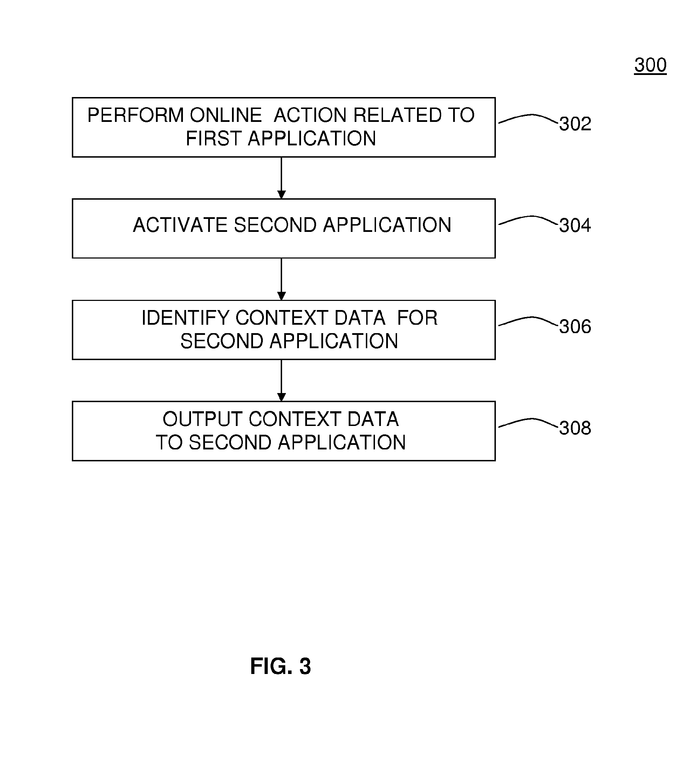

Figure 3 is a flowchart of a method 300 for providing context-related data to an application, in accordance with an embodiment. In describing the method 300, reference is also made to FIGs. 1 and 2. The method 300 can be governed by instructions that are stored in the memory device 114 and can be executed by the processor 102 of the mobile device architecture 100

The method 300 commences at block 302 with a computer-related action being performed at a mobile phone or related device. The action can correspond to a first application such as the browser 130 executed on a mobile device. For example, the action can be a user browsing a website from the browser 130, or querying a database with a database query tool. Other examples can include context-related actions such as a user editing a spreadsheet or document processing application, viewing a photograph, recording a voice clip, or performing any other task requiring one or more computer applications.

At block 304, a second application of the applications 120 is activated. In an embodiment, the second application is a context-aware application. The second application can be a native application such as the GPS 122, the dialer application 124, the IM application 126, the email application 128, and/or other application programs 132 such as a Facebook® application. The second application can be opened before the first application is opened or used, or after the first application is opened or used.

At block 306, context-related data can be identified for the second application. Context-related data can include contents of the first application, for example, information characterizing the user and/or the user's current activities. A user context can be monitored to determine whether other actions or tasks are being performed, and whether those tasks are related to other applications such as the dialer application 124, and context-related data can be identified from the context check results. Here, the bridge application 134 can communicate with a context-aware server or related system to acquire information concerning the user's context, for example, to establish a relationship between the online tasks and the activation of an application 120. Also, actions conducted in the second application can be relayed to the first application. For example, a user can activate the dialer application 124, then realize that the dialer does not have the phone number or contact information needed to place a call. The user can then activate the browser 130, enter a webpage entitled "linkedIn", select a desired profile, whereby a corresponding email address, phone number, and the like can be acquired. The user can return to the dialer application 124, which is now populated with the phone number and waits for the user to press a "call" button.

The plugin module 202 can perform a keyword search, web crawl, and the like of the contents. The plugin module 202 can search for and identify context-related data after the first application is activated. Here, data can be presented in the first application, for example, contents of a webpage, identified by the plug-in module 202 as including context-related information, and stored in the application context cache 136, or output to the second application such as the dialer application 124. The plug-in module 202 can search for and identify context-related data before or after the second application is activated, or concurrently with the activation of the second application. For example, a user can read a document about "black holes" displayed on the screen. The user can open the browser 130, whereby the search bar can contain the term "black holes" and/or other keywords determined from the current page of the document.

In another embodiment, the bridge application 134 provides user-determined rules from the rules engine 208 that determine if the current action is related to the second application. For example, the plug-in module 202 can query a website for phone numbers in accordance with a predetermined rule to search for phone numbers when the dialer application 124 is activated.

At block 308, the context-related data is output to the second application by the bridge application system 134. The pre-trigger module 206 may populate the second application with context-related data stored in the application context cache 136. In another embodiment, the plug-in module 202 automatically provides the context-related data to the second application according to a format recognized by the second application via an API 118 and/or the native application interface 210. In another embodiment, the context-related data is output to the second application after the user initiates a request to the plug-in module 108 to obtain the context-related data, for example, after the second application is activated.

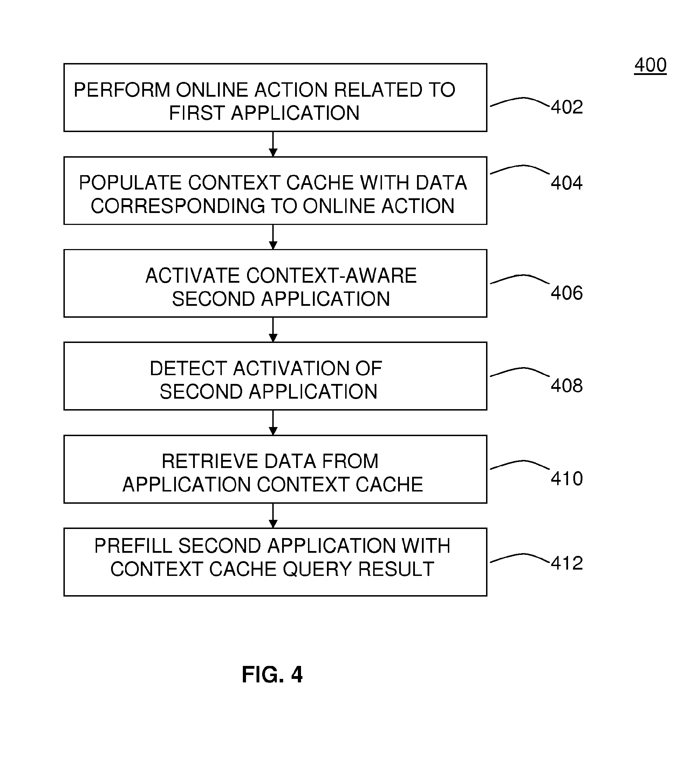

Figure 4 is a flowchart of a method 400 for bridging context-related data between two applications, in accordance with an embodiment. In describing the method 400, reference is also made to FIGs. 1 and 2. The method 400 can be governed by instructions that are stored in the memory device 114 and can be executed by the processor 102 of the mobile device architecture 100.

At block 402, a mobile phone user can perform an action related to a first application such as a web browser, a word processing application, a photograph editor, or other examples referred to herein. The action when performed can provide data such as context-related information that can be used by another application on a mobile device or other computer.

At block 404, the application context cache 136 can be populated with data corresponding to the action. In an embodiment, the plug-in module 202 of the bridge application 134 can populate the application context cache 136 with data determined from a webpage, database, or other content source. The data used to populate the cache can be obtained using existing methods. For example, a keyword search, pattern match search, and the like can be performed for when mining a content source such as a website or database for data to be added to the application context cache 136. In another example, the plug-in module 202 can communicate directly with the first application to provide context-related data to the application context cache 136. In another example, a web crawler or related program can be implemented for retrieving data, for example, metadata corresponding to the relevant content. The bridge application system 134, in particular, the rules engine 208, can be configured to identify particular types of content, for example, phone numbers, email addresses, twitter data, or a combination thereof, or to limit a number of entries to be cached, determine an order in which to present content items to another application, and the like.

At block 406, a second application is activated from the mobile device. The second application can be a native application such as the dialer application 124 or the email application 130. In a preferred embodiment, the second application is a context-aware application for querying the cache 136 for information relevant to the second application. The second application can be configured to fetch context-related data via an API 118 in communication with the native application interface 210 of the bridge application system 134.

At block 408, the bridge application system 134, more specifically, the context monitoring module 204, can detect context-related information, for example, that the second application is activated, and/or can detect other related user contexts, for example, whether other applications 120 are activated, inactivated, in use, or in other states.

At block 410, the bridge application system 134, more specifically, the pre-trigger module 206, can retrieve data from the application context cache 136 that is applicable to the second application. The rules engine 210 can establish whether the retrieved data is applicable to the second application. The pre-trigger module 206 can check the application context cache 136 upon activation of the second application, and provide the results to the second application.

At block 412, the second application can be prefilled with the data, more specifically, a context cache query result, retrieved by the pre-trigger module 206 from the application context cache 136. The context cache query result can be populated into the second application using an API 118, for example, a native operating system API. After the second application is pre-filled, the user can operate the second application in accordance with the established features and capabilities of the second application. In the abovementioned example where the dialer application 124 is used, a user can place calls from the dialer application 124 prefilled with the phone number.

In other embodiments, the second application can be a non-context aware application. Unlike context aware applications, a non-context aware second application is not aware the bridge application system 134 or the API 118, and therefore does not access relevant data from the cache 136, but can instead access a contact database or other native database. Here, the bridge application system 134 can activate the native application interface 210 to output data to the underlying structures used by a native application, for example, a contact list.

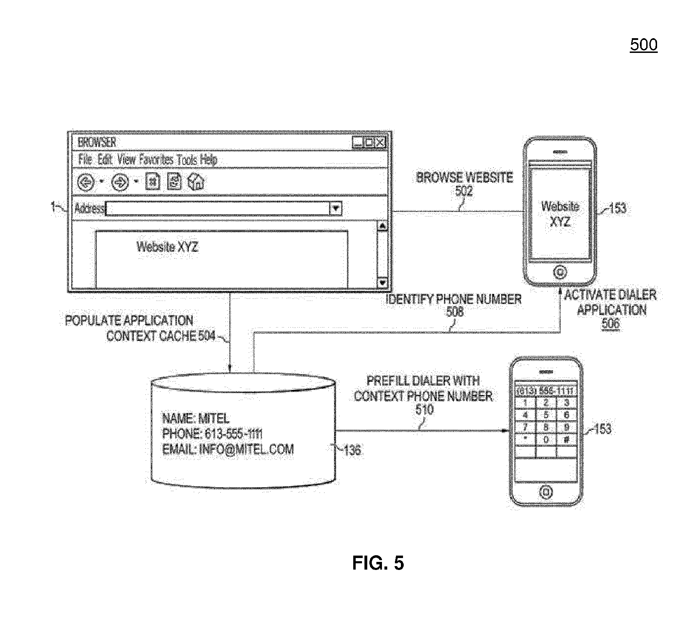

Figure 5 is a schematic block diagram illustrating a method 500 for populating the dialer application 124 with a phone number identified during a website search, in accordance with an embodiment. In describing the method 500, reference is also made to FIGs. 1-4. The method 500 can be governed by instructions that are stored in a memory device 114 and can be executed by the processor 102 of the mobile device architecture 100, which is included in a mobile device 153.

The method 500 commences with a user browsing 502 a web site from the mobile device 153 for a phone number. In doing so, a webpage can be presented on a display that includes context-related information, more specifically, information characterizing user online activity. In this example, a user presents a company webpage 1 indicating from a context perspective that the user intends to search for company contact information.

A plug-in module 208 of the mobile device 153 can populate 504 the application context cache 136 with data retrieved from the company webpage, for example, company contact names, addresses, phone numbers, email addresses, and the like. The data used to populate the context cache 136 can be obtained by a method known to those of ordinary skill in the art, for example, a keyword search, a rules-based query, and the like.

The mobile device user 153 can activate 506 the dialer application 124, for example, by pressing the "phone" button on the touchscreen of the mobile device 153.

The bridge application system 134 can detect that the dialer application 124 is activated and identify 508 that a phone number is stored in the application context cache 136. The bridge application system 134 can determine that the phone number corresponds to a specific user context, i.e., the user's navigation of the company website, and predict that since the user was recently interested in the company (after viewing the company webpage) that the user may wish to call the contact number associated with the company. The dialer application 124 can be prefilled 510 with the phone number retrieved from the context cache 136, for example, using the pre-trigger module 206.

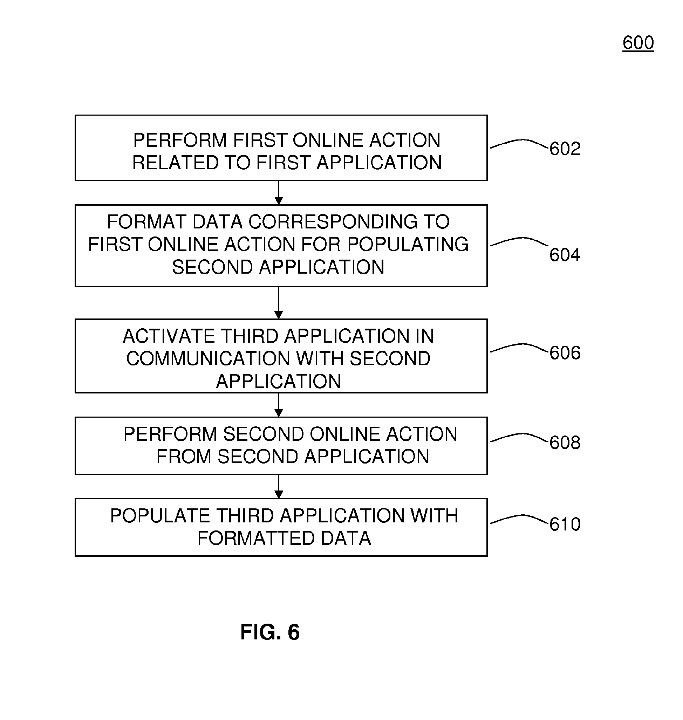

Figure 6 is a flowchart of a method 600 for bridging context-related data between two applications, in accordance with another embodiment. In describing the method 600, reference is also made to FIGs. 1 and 2. The method 600 can be governed by instructions that are stored in the memory device 114 and can be executed by the processor 102 of the mobile device architecture 100.

At block 602, a mobile phone user can perform an action related to a first application, for example, the browser 130. Block 602 can be similar to block 402 described above, so a detailed description thereof is omitted for reasons related to brevity.

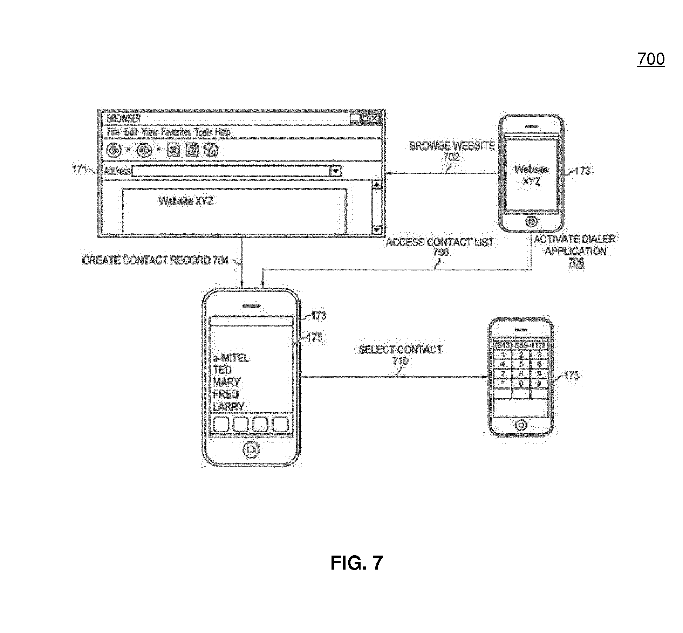

At block 604, the data can be formatted in a manner that permits the data to be received by the second application. For example, as described in Figure 7, the second application can be a contact list of the dialer application 124 that communicates with the dialer application 124. In this example, the data is formatted as part of a contact record. The plug-in module 202 can populate a new contact record with the retrieved context-related data such as a phone number, email address, and the like using the native application interface 210 provided by the host operating system. The populated contact record in turn can be added to the native contact list.

The data used to populate the cache can be obtained using existing data mining methods similar to those described above, for example, a keyword search and the like. The rules engine 208 can be configured to identify particular types of content, determine an order in which to present content items to the second application, and the like.

At block 606, a third application can be activated that is in communication with the second application. The third application can be a native application such as a dialer, email application, or other context-aware application. In an embodiment, the second application and the third application can be the same application, for example, a dialer having a resident contact list.

At block 608, a second action can be performed from the second application. Referring to the previous example, a user can select the new contact, which communicates with the third application, e.g., the dialer application 124, to generate a call using the phone number in the contact.

At block 610, the third application can be populated with the formatted data. For example, the dialer application 124 can be populated with the phone number in the added contact record.

Accordingly, the embodiment described with reference to the method 600 of Figure 6 eliminates the need for an application context cache and can instead generate an application-compliant record that includes the context-related data. In this manner, the context-related data can be provided directly and automatically to a native application, rather than retrieving the data from a separate storage device, e.g., a cache 136.

Figure 7 is a schematic block diagram illustrating a method 700 for populating a contact list with a phone number identified during a website search, in accordance with an embodiment. In describing the method 700, reference is also made to FIGs. 1-3 and 6. The method 700 can be governed by instructions that are stored in the memory device 114 and can be executed by the processor 102 of the mobile device architecture 100, which is included in a mobile device 173.

The method 700 commences with a user browsing 702 a website. In doing so, a webpage 171 can be presented on a display that includes context-related information, more specifically, information characterizing user online activity. In this example, a user presents a company webpage indicating from a context perspective that the user intends to search for company contact information.

The plug-in module 208 of the mobile device 173 can create 704 a contact record 175 that is formatted to include one or more contact details, for example, a contact name, phone number, and the like, retrieved from the company webpage during a query. The phone number added to the contact record 175 can be obtained by a method known to those of ordinary skill in the art, for example, key word searching, web crawling, and the like. The contact record 175 can include a special character or symbol, for example, the letter "a" in front of the contact name to distinguish the contact record 175 from other contact records. The contact record 175 can be added as the first contact record on the contact list regardless of the organization of the contact list, for example, alphabetical order. The contact record 175 can be removed from the contact list, for example, by the API 118, when the action is complete, or when the user closes the browser 130 or the dialer application 124. Manipulation of the contact list, for example, the creation and deletion of records can rely on the native interfaces provided by the operating system.

The mobile device user can activate 706 the dialer application 124, for example, by pressing the "phone" button on the touchscreen. The mobile device user can access 708 the contact list that includes the new contact record, and select 710 the new contact record, which in turn can invoke a well-known call initiation routine in the dialer application 124 for placing phone calls, SMS messages, SIP calls, and the like from the dialer application 124.

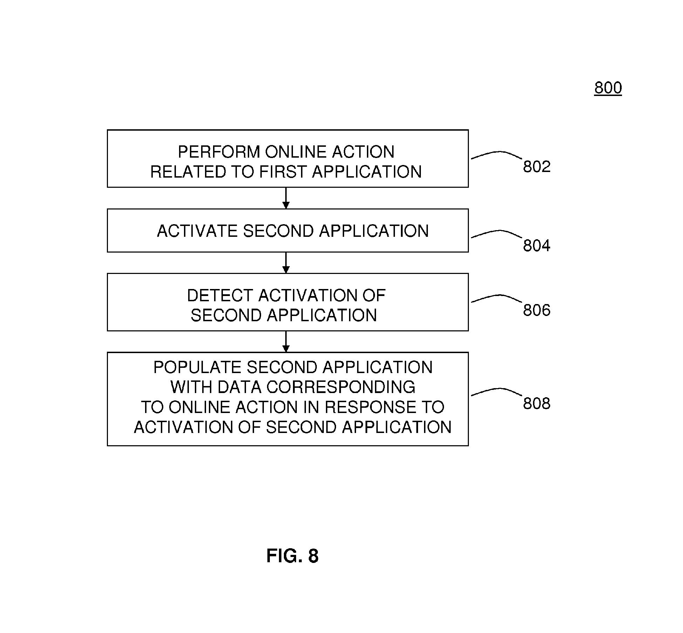

Figure 8 is a flowchart of a method 800 for bridging context-related data between two applications, in accordance with another embodiment. In describing the method 800, reference is also made to FIGs. 1 and 2. The method 800 can be governed by instructions that are stored in the memory device 114 and can be executed by the processor 102 of the mobile device architecture 100.

At block 802, a mobile phone user can perform an action related to a first application. Block 802 can be similar to blocks 402 and 602 described above, so a detailed description thereof is omitted for reasons related to brevity.

At block 804, the mobile phone user can activate a second application, for example, a context-aware application, from the mobile device. The second application can be a native application such as the dialer application 124. In a preferred embodiment, the second application is a context-aware application. The second application can be configured to receive or request context-related data via an API 118 in communication with the bridge application system 134.

At block 806, the bridge application system 134, more specifically, the context monitoring module 204, can detect that the second application is activated, and/or can detect other related user contexts, for example, whether other applications 120 are activated, inactivated, in use, or in other states.

At block 808, the second application is populated with data corresponding to the action related to the first application in response to an activation of the second application. The data can be context-related data, similar to that described herein. The data can be formatted prior to population, similar to block 610 described above.

Accordingly, the embodiment described with reference to the method 800 of Figure 8 addresses an on-demand configuration requirement, where an application is populated with relevant data when the application is determined to be activated rather than populating data during access of a website by the web browser 130 or related environment that may occur prior to activating the application.

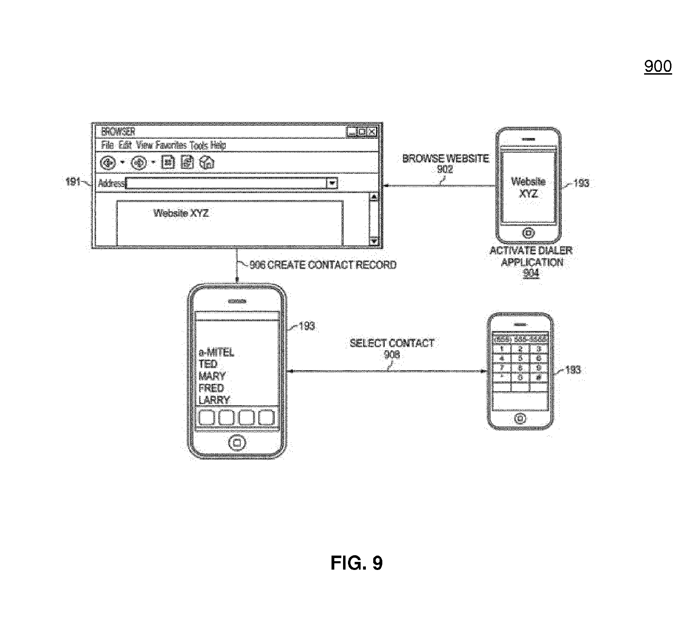

Figure 9 is a schematic block diagram illustrating a method 900 for creating a contact from a phone number identified during a website search in response to a dialer is activated, in accordance with an embodiment. In describing the method 900, reference is also made to FIGs. 1-3 and 8. The method 900 can be governed by instructions that are stored in the memory device 114 and can be executed by the processor 102 of the mobile device architecture 100, which is included in a mobile device 193.

The method 900 commences with a user browsing 902 a website. In doing so, a webpage 191 can be presented on a display that includes context-related information, more specifically, information characterizing user online activity. In this example, a user presents a company webpage indicating from a context perspective that the user intends to search for company contact information.

The mobile device user can activate 904 a dialer application 124 of the mobile device 193, for example, by pressing the "phone" button on the touchscreen of the mobile device 193.

A contact can be created 906 to include one or more contact details, for example, a contact name, phone number, and the like, retrieved from the company webpage during a query. Other details of the contact record are similar to those described above with reference to contact record 175, and will not be repeated for reasons related to brevity. The contact record is created by the background application system 134 in response to the context monitoring module 204 detecting the activation of the dialer application 124. The mobile device user can thereby select 908 the new contact record, and place subsequent calls and the like from the dialer application 124.

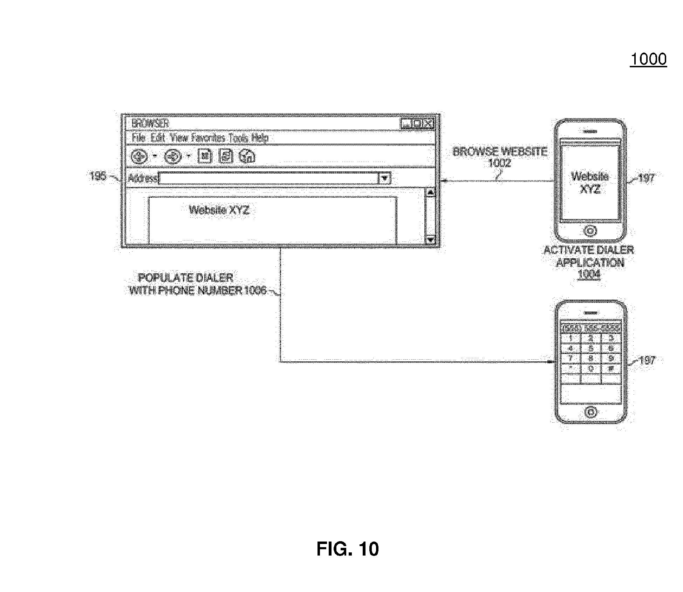

Figure 10 is a schematic block diagram illustrating a method 1000 for populating the dialer application 124 with a phone number identified during a website search in response to the dialer being activated, in accordance with an embodiment. In describing the method 1000, reference is also made to FIGs. 1-3, 8, and 9. The method 1000 can be governed by instructions that are stored in the memory device 114 and can be executed by the processor 102 of the mobile device architecture 100, which is included in a mobile device 197.

The method 1000 commences with a mobile device user browsing 1002 a website for contact information. The mobile device user can activate 1004 a dialer application 124 from the mobile device 197. Other details related to method steps 1002 and 104 are similar to method steps 902 and 904, respectively, so a detailed description thereof is omitted for reasons related to brevity.

The context monitoring module 204 can detect the activation of the dialer application 124. In response, the dialer application 124 can be populated 1006 directly with the phone number retrieved. The mobile device user can thereby place subsequent calls and the like from the dialer application 124 without an extra step of selecting a contact from a contact list and the like.

While many of the specific examples herein have been given regarding mobile devices, the systems and methods disclosed can also be cloud computing-based or integrated with a network of users. For example, a user may be using several devices simultaneously such as a mobile device and a tablet, or a personal computer and a mobile device. The bridge application system may be centrally hosted, and applications from the several devices associated with the user can provide context information. Thus, when the user activates a web browser on the user's personal computer, then clicks a button to dial a phone number from the user's phone, an application bridge server can use information obtained from the application on the personal computer to respond to context requests from the phone dialer.

While the invention has been shown and described with reference to specific embodiments, it should be understood by those skilled in the art that various changes in form and detail may be made therein without departing from the scope of the invention as recited in the accompanying claims.

It should be also understood that many of the functional units described in this specification have been labeled as modules or systems, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

A storage device can include a computer readable storage medium, which may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Furthermore, the described features, structures, or characteristics may be combined in any suitable manner in one or more embodiments. In the description, numerous specific details are provided to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

## Claims

1. A bridge application system, comprising:
a context monitoring module configured to detect an action related to a first application;
a plug-in module configured to search the first application for context-related data corresponding to the action; and
a native application interface configured to output the context-related data to the second activated application.

2. The bridge application system of claim 1, further comprising a rules engine that includes one or more rules that establishes context-based search criteria for the plug-in module.

3. The bridge application system of claim 1 or claim 2, wherein the plug-in module is configured to store the context-related data in an application context cache, and optionally further comprising a pre-trigger module configured to select the context-related data from the application context cache and pre-fill the second application with the context-related data in response to the context monitoring module detecting a launching of the second application.

4. The bridge application system of any preceding claim, wherein the plug-in module is configured to format the context-related data for compatibility with the second application, and is configured to output the formatted context-related data to the second application, and optionally wherein the plug-in module is configured to output the formatted context-related data to the second application in response to the context monitoring module detecting an activation of the second application.

5. The bridge application system of any preceding claim, wherein the native application interface is configured to populate the second application with the context-related data received from the plug-in module in response to the context monitoring module detecting an activation of the second application.

6. A method for providing an application with data corresponding to a context-related query, comprising:
performing a first action related to a first application;
determining a context-related data result related to the first action;
providing the context-related data result to a second application; and
processing the context-related data result by the second application to perform a second action.

7. The method of claim 6, wherein providing the context-related data result to the second application comprises:
populating an application context cache with data corresponding to a user context, the data including the context-related data related to the first action;
detecting an activation of the second application; and
prefilling the second application with the context-related data result from the application context cache.

8. The method of claim 6, wherein providing the context-related data result to the second application comprises:
formatting the context-related data result for compatibility with the second application;
activating a third application in communication with the second application;
performing the second action from the second application; and
populating the third application with data related to the formatted context-related data result.

9. The method of claim 8, wherein the second application is a contact list application and the third application is a dialer application, or wherein the second application and the third application are the same application.

10. The method of claim 8, further comprising performing a third action from the third application in response to populating the third application with data related to the formatted context-related data result, and optionally further comprising:
populating the second application with the formatted context-related data result; and
performing the third action by selecting the formatted context-related data result.

11. The method of claim 6 or claim 7, further comprising:
detecting a user context related to the activation of the second application; and
populating the second application with the context-related data result in response to detecting the user context.

12. The method of claim 6 or claim 7, wherein the first application is a browser application and the second application is a phone dialer application.

13. The method of claim 6 wherein:
performing a first action related to a first application comprises searching a website from a web browser;
determining a context-related data result related to the first action comprises activating a mobile device application and retrieving context-related contents from the website; and
providing the context-related data result to a second application and processing the context-related data result by the second application to perform a second action comprises populating the mobile device application with a result of the retrieved context-related contents.

14. The method of claim 13, wherein populating the mobile device application with the result of the retrieved context-related contents comprises:
storing the retrieved context-related contents in an application context cache;
detecting the activation of the mobile device application; and
prefilling the mobile device application with the result of the retrieved context-related contents stored in the application context cache.

15. The method of claim 13, wherein populating the mobile device application with the result of the retrieved context-related contents comprises:
creating a contact record that includes the result; and
adding the contact record to a contact list corresponding to the mobile device application,
or
detecting the activation of the mobile device application; and
populating the mobile device application with the result in response to detecting the activation of the mobile device application.
